# EUROPEAN PATENT APPLICATION

(11) **EP 4 759 677 A1**
(43) Date of publication of application: **17.06.2026**
(21) Application number: 24851323.6
(22) Date of filing: 12.04.2024
(51) Int. Cl.: B62D 5/04, B62D 1/16

(54) **VEHICLE STEERING DEVICE**

(30) Priority: 07.08.2023 JP 2023128711
(71) Applicant: NSK Steering & Control, Inc., Tokyo, 141-0032 (JP)
(72) Inventor: TAGUCHI, Yuichiro, Maebashi-shi, Gunma 371-8527 (JP)
(74) Representative: SSM Sandmair
(86) International application number: PCT/JP2024/014838
(87) International publication number: WO 2025/032889

(57) **Abstract**

A stopper mechanism unit in a vehicle steering device includes: a rotating member including a connecting portion connected to a steering shaft and a tubular portion located on one side in an axial direction with respect to the connecting portion and having an internal thread on an inner circumference; a linear motion member that makes a linear motion in the axial direction with respect to the rotating member; a first housing located on an outer circumferential side of the tubular portion and the linear motion member; and a second housing located on the other side in the axial direction with respect to the first housing and on an outer circumferential side of the connecting portion and configured to be attached to the first housing.

## Description

### Field

What is disclosed herein relates to a vehicle steering device.

### Background

A steer-by-wire vehicle steering device has a configuration in which a steering shaft connected to a steering wheel is mechanically disconnected from a turning wheel. In this configuration, the steering reaction force is not transmitted to the steering wheel, and thus, a steering reaction force device and a stopper mechanism unit are provided on the steering shaft.

The steering reaction force device applies, to the steering wheel, a reaction force in a direction opposite to a rotation direction (steering direction) of the steering wheel to give a natural steering feel to the driver. The steering reaction force device includes, for example, a motor and a deceleration mechanism, and the steering reaction force generated by the motor is transmitted to the steering shaft via a deceleration mechanism. The deceleration mechanism includes a worm shaft and a worm wheel, for example. When a shaft tooth of the worm shaft meshes with a wheel tooth of the worm wheel, rotation of the motor is transmitted to the worm wheel via the worm shaft.

The stopper mechanism unit includes: for example, a rotating member having a tubular shape fitted to the outer circumference of the steering shaft; a nut that is fastened to the outer circumferential side of the rotating member and makes a linear motion in the axial direction with respect to the rotating member; a first stopper fitted to one side in the axial direction of the rotating member to stop the linear motion of the nut; a second stopper fitted to the other side in the axial direction of the rotating member to stop the linear motion of the nut; and a first housing and a second housing that accommodate the rotating member, the nut, the first stopper, and the second stopper. An external thread is provided on an outer circumference of the rotating member, and an internal thread that meshes with the external thread is provided on an inner circumference of the nut. When the nut abuts on the first stopper or the second stopper, the rotation of the rotating member is stopped, and accordingly, the rotation (steering) of the steering wheel is also stopped via the steering shaft.

### Citation List

### Patent Literature

Patent Literature 1: DE-A 102020126785

### Summary

### Technical Problem

However, Patent Literature 1 uses complicated assembly work of the stopper mechanism unit, leading to a possibility of an increase in the work load. Specifically, first, the first housing is attached to the outer circumference of the steering shaft. Next, a stopper unit including the rotating member, the nut, the first stopper, and the second stopper is assembled. Specifically, the first stopper is fitted to one side in the axial direction of the rotating member, and the nut is fastened to the outer circumference of the rotating member. Thereafter, the second stopper is fitted to the other side in the axial direction of the rotating member to form a stopper unit. The stopper unit is inserted (spline-fitted) toward one side in the axial direction of the steering shaft to be abutted on the first housing. Thereafter, the second housing is fitted from one side in the axial direction of the steering shaft to complete the assembly work of the stopper mechanism unit.

The present disclosure has been made in view of the above problems, and aims to provide a vehicle steering device including a stopper mechanism unit that can be assembled with a simpler procedure.

### Solution to Problem

To achieve the above-described object, a vehicle steering device is a device in which a steering shaft to which a steering wheel is connected, and a turning wheel, are mechanically disconnected. The vehicle steering device includes a stopper mechanism unit that regulates a range of a rotation angle of the steering wheel when the steering wheel is rotated. The stopper mechanism unit includes: a rotating member that extends in an axial direction of a central axis, is rotatable in a circumferential direction around the central axis, and includes a connecting portion and a tubular portion, the connecting portion being connected to the steering shaft, the tubular portion being located on one side in the axial direction with respect to the connecting portion and having an internal thread on an inner circumference; a linear motion member that is provided on an inner circumferential side of the tubular portion, has an external thread that meshes with the internal thread on an outer circumference, and is configured to make a linear motion in an axial direction with respect to the rotating member; a first housing that is located on an outer circumferential side of the tubular portion and the linear motion member and is configured to hold the linear motion member in a state where the linear motion member is not rotatable in a circumferential direction and is capable of making a linear motion in the axial direction; a second housing that is located on the other side in the axial direction with respect to the first housing and on an outer circumferential side of the connecting portion, and configured to be attached to the first housing; and a first abutment portion and a second abutment portion on which the linear motion member abuts to stop the linear motion.

As described above, Patent Literature 1 uses complicated assembly work of the stopper mechanism unit, leading to a possibility of an increase in the work load. Specifically, the first housing is attached to the outer circumference of the steering shaft. Next, a stopper unit including the rotating member, the nut, the first stopper, and the second stopper is assembled. The stopper unit is inserted (using spline fitting) toward one side in the axial direction of the steering shaft to abut on the first housing, and thereafter, the second housing is fitted from one side in the axial direction of the steering shaft, to complete the assembly work of the stopper mechanism unit.

In contrast, according to the present disclosure, the stopper mechanism unit can be assembled by the following simple procedure. Specifically, first, the external thread of the linear motion member is fastened to the internal thread of the rotating member from one side to the other side in the axial direction, thereby assembling the linear motion member to the rotating member from one side to the other side in the axial direction. Next, the first housing is inserted from one side to the other side in the axial direction on the outer circumferential side of the rotating member and the linear motion member, and the second housing is attached to the first housing. In this manner, according to the present disclosure, it is possible to provide a vehicle steering device including a stopper mechanism unit that can be assembled with a simpler procedure.

As a desired aspect, an internal spline is provided on an inner circumference of the first housing. The linear motion member includes: an external thread portion having the external thread and capable of abutting on the first abutment portion and the second abutment portion; and a spline portion located on one side in the axial direction with respect to the external thread portion and provided with an external spline fittable to the internal spline on an outer circumference. A through hole penetrating in the axial direction is provided at an end on one side in the axial direction of the first housing. In a state where the linear motion member makes a linear motion toward one side in the axial direction, the spline portion of the linear motion member is capable of protruding from the through hole of the first housing to one side in the axial direction.

Rotating the steering wheel rotates the steering shaft and the rotating member, allowing the linear motion member to move in the axial direction. Here, in a case where the linear motion member is accommodated inside the housing and is not visible from the outside, the position of the linear motion member in the axial direction is difficult to recognize, and thus, the rotation direction (clockwise direction or counterclockwise direction) of the steering wheel is not known, and the rotation angle is also difficult to recognize.

In contrast, in the present disclosure, the spline portion of the linear motion member can protrude from the through hole to one side in the axial direction, enabling visual recognition of the rotation direction and the rotation angle of the steering wheel. This makes it easier to recognize the rotation direction (clockwise direction or counterclockwise direction) and the rotation angle of the steering wheel. By applying a marking or the like to the outer circumferential surface of the spline portion, the rotation direction and the rotation angle of the steering wheel can be recognized with higher accuracy.

As a desired aspect, a gap is provided in the axial direction between a part of the rotating member and an inner surface of the second housing, and the gap is provided to accommodate an elastic member to reduce impact when the linear motion member abuts on the first abutment portion and impact when the linear motion member abuts on the second abutment portion.

Therefore, when the linear motion member moves to one side in the axial direction and abuts on a first abutment portion, the first housing and the second housing move to one side in the axial direction. This allows the elastic member to contract in the axial direction, reducing the impact when the linear motion member and the first abutment portion collide with each other.

When the linear motion member moves to the other side in the axial direction and abuts on a second abutment portion, the second housing moves to the other side in the axial direction, and the elastic member contracts in the axial direction to reduce the impact. In this manner, even when the linear motion member moves to either one side or the other side in the axial direction, the elastic member can reduce the impact when the rotating member or the first housing and the linear motion member hit each other.

As a desired aspect, a linear motion distance variable member is interposed in at least one of a space between the first abutment portion and the external thread portion and a space between the second abutment portion and the external thread portion, the linear motion distance variable member having a thickness in an axial direction and on which the linear motion member is capable of abutting, the linear motion distance variable member being configured to vary an distance in the axial direction when the linear motion member makes a linear motion.

Therefore, according to the present disclosure, with the simple configuration of the linear motion distance variable member, it is possible to vary the distance in the axial direction when the linear motion member performs linear motion, and eventually vary the rotation angle of the steering wheel.

As a desired aspect, the spline portion of the linear motion member includes a protrusion that is disposed on one side in the axial direction in the first housing with respect to an axial end surface on one side in the axial direction of the first housing, protrudes in the radial direction, and is configured to abut on the axial end surface to stop a linear motion of the linear motion member toward the one side in the axial direction.

When the linear motion member abuts on the second abutment portion, the non-rotating linear motion member and the rotating second abutment portion abut on each other, generating friction between them, and the linear motion member and the second abutment portion can be eventually damaged by wear.

Here, in the present disclosure, the linear motion member and the first housing are both non-rotating members. Therefore, when the linear motion member makes a linear motion toward the other side in the axial direction, the non-rotating protrusion and the non-rotating first housing abut on each other. Therefore, according to the present disclosure, damage to the protrusion and the first housing can be suppressed.

### Advantageous Effects of Invention

According to the present disclosure, it is possible to provide a vehicle steering device including a stopper mechanism unit that can be assembled with a simpler procedure.

### Brief Description of Drawings

FIG. 1 is a schematic diagram illustrating an overall configuration of a vehicle steering device according to a first embodiment.
FIG. 2 is a cross-sectional view illustrating a part of FIG. 1.
FIG. 3 is a cross-sectional view illustrating a part of FIG. 2.
FIG. 4 is an enlarged cross-sectional view of a part of FIG. 3.
FIG. 5 is an exploded perspective view of a stopper mechanism unit according to the first embodiment.
FIG. 6 is a cross-sectional view of a stopper mechanism unit according to a second embodiment.
FIG. 7 is an enlarged cross-sectional view of portion A in FIG. 6.
FIG. 8 is a perspective view of a wave washer.
FIG. 9 is a cross-sectional view of a stopper mechanism unit according to a third embodiment.
FIG. 10 is a cross-sectional view of a stopper mechanism unit according to a fourth embodiment.
FIG. 11 is a schematic diagram of FIG. 10 as viewed from the X1 side.
FIG. 12 is a perspective view of a motion stop.
FIG. 13 is a schematic diagram according to a modification in which a pin is applied as a protrusion. Description of Embodiments

Embodiments of the present invention will be described in detail with reference to the drawings. The present invention is not intended to be limited by the following embodiments. Constituent elements in the following embodiments include elements easily assumed by a person skilled in the art, or equivalents. Moreover, constituent elements in the following embodiments may be appropriately combined with each other. Furthermore, portions having the same structure are denoted by the same reference numerals, and the description thereof will be omitted. In the coordinates, the X direction indicates the axial direction of the rotating member, the X1 side is one side in the axial direction, and the X2 side is the other side in the axial direction.

### (First Embodiment)

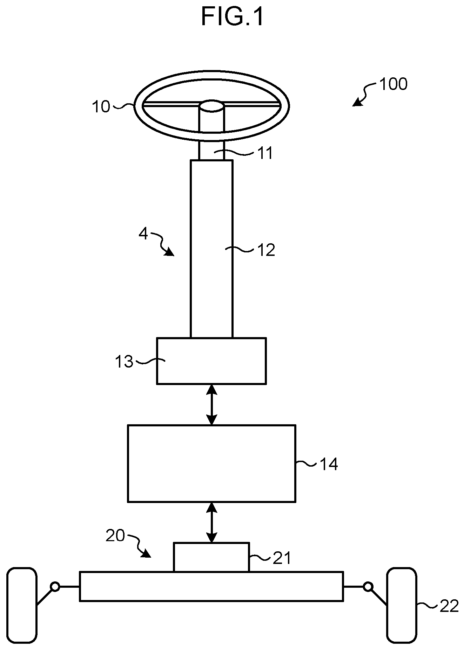

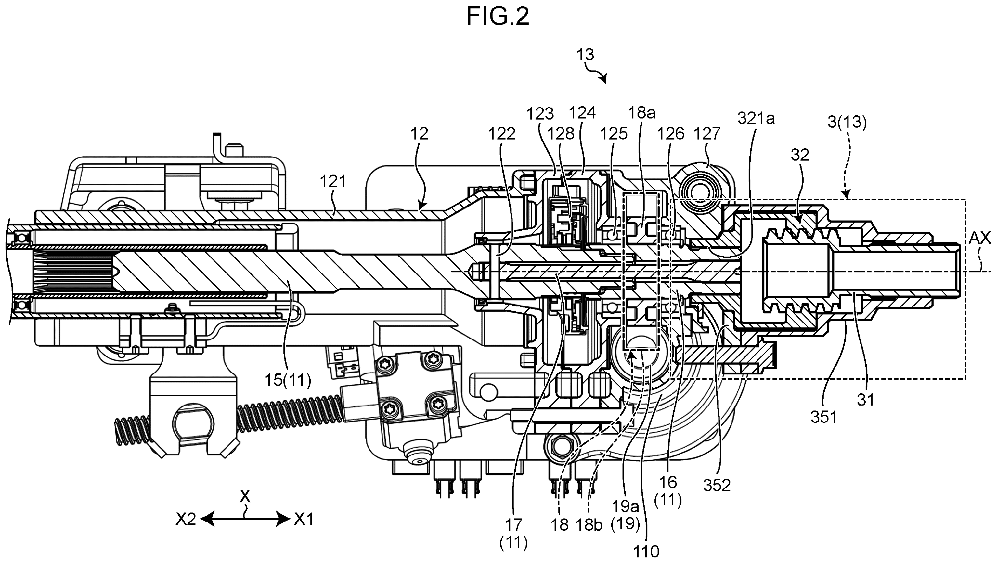

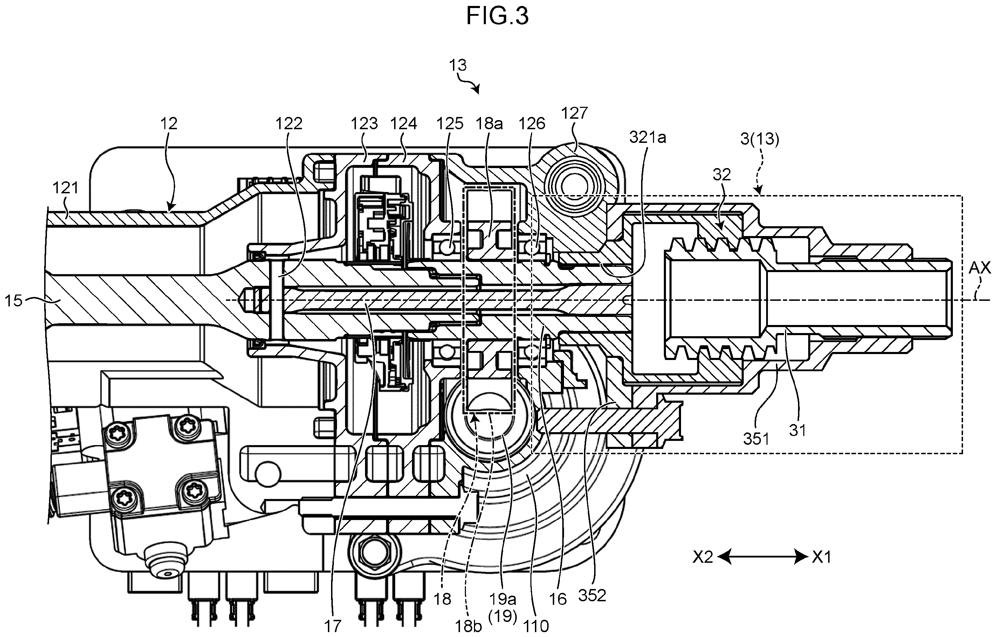

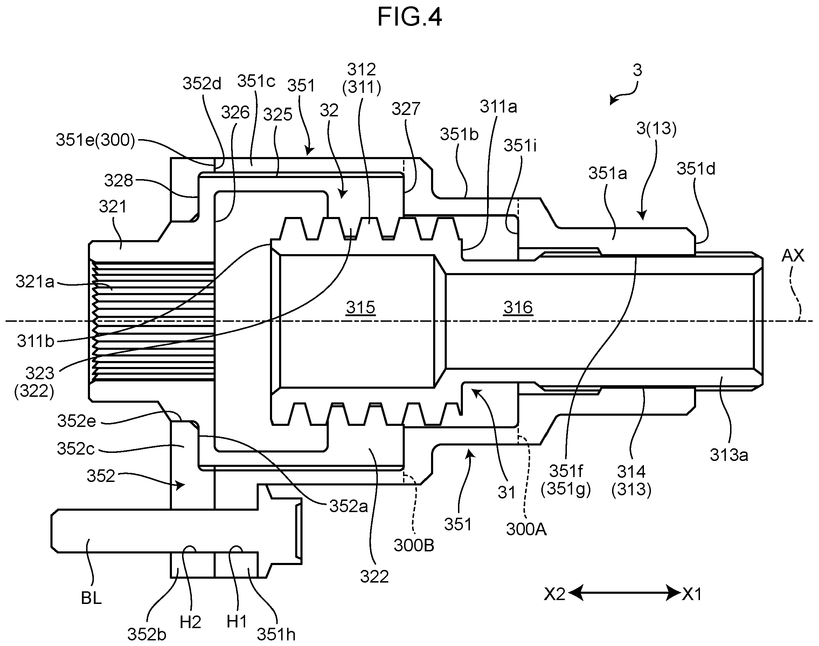

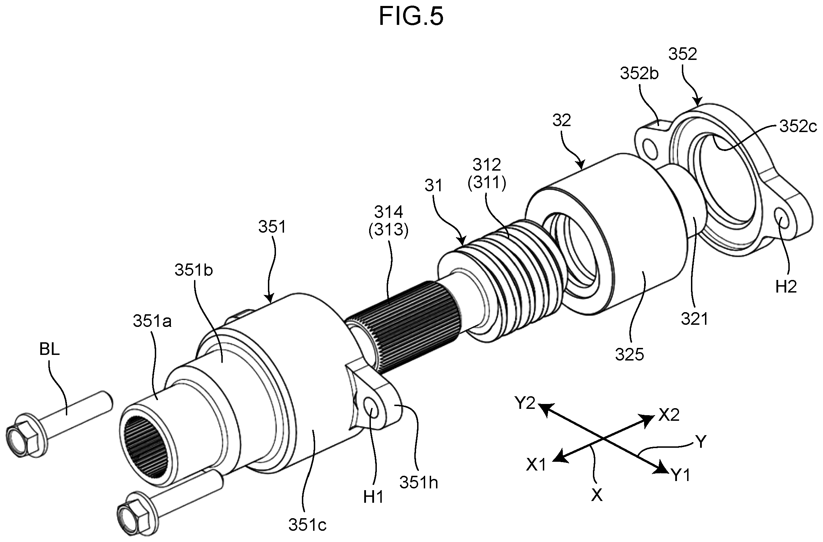

Hereinafter, a first embodiment will be described. FIG. 1 is a schematic diagram illustrating an overall configuration of a vehicle steering device according to the first embodiment. FIG. 2 is a cross-sectional view illustrating a part of FIG. 1. FIG. 3 is a cross-sectional view illustrating a part of FIG. 2. FIG. 4 is an enlarged cross-sectional view of a part of FIG. 3. FIG. 5 is an exploded perspective view of the stopper mechanism unit according to the first embodiment.

A vehicle steering device 100 according to the present embodiment is a steer-by-wire vehicle steering device, in which a steering wheel 10 and a turning wheel 22 are mechanically disconnected. As illustrated in FIG. 1, a vehicle steering device 100 includes a steering unit 4, a control device (ECU) 14, and a turning unit 20.

As illustrated in FIGS. 1 to 3, the steering unit 4 is provided with a steering reaction force device 13. At the time of steering the steering wheel 10, the steering reaction force device 13 applies, to the steering wheel 10, a steering reaction force in a direction opposite to the steering direction of the steering wheel 10. The control device (ECU) 14 calculates reaction torque according to the traveling state of the vehicle based on the operation information, adjusts the power value to be supplied to a motor 110 of the steering reaction force device 13 based on the reaction torque, and the motor 110 operates in accordance with the power value, allowing the steering reaction force of the steering wheel 10 to be transmitted to the operator. In addition, the control device (ECU) 14 calculates a current command value based on the operation information and controls a current to be supplied to a turning motor 21 of the turning unit 20. In the turning unit 20, the turning wheel 22 turns via various gears connected to the turning motor 21. Hereinafter, each configuration of the vehicle steering device 100 will be described in detail. In the steer-by-wire vehicle steering device 100, the steering wheel 10 and the turning wheel 22 are mechanically disconnected. However, in the present invention, the term "disconnected" includes, for example, a mode in which the steering wheel 10 and the turning wheel 22 can be connected by a clutch device or the like in an emergency, etc.

As illustrated in FIG. 1, the steering unit 4 includes a steering wheel 10, a steering shaft 11, a steering housing 12, and a steering reaction force device 13.

As illustrated in FIGS. 2 and 3, the steering shaft 11 extends in the X direction (axial direction). The steering wheel 10 is rotatably connected to the steering shaft 11. The steering shaft 11 is housed inside the steering housing 12. The steering shaft 11 includes a column shaft 15, an output shaft 16, and a torsion bar 17.

The column shaft 15 and the output shaft 16 are connected to each other via the torsion bar 17. Specifically, an insertion hole is provided in the axial direction at an X1 side end of the column shaft 15, and the torsion bar 17 is inserted into the insertion hole. The column shaft 15 and the torsion bar 17 are relatively non-rotatably connected to each other via a pin 122. The output shaft 16 is provided with a through hole penetrating in the axial direction, and an X1 side end of the torsion bar 17 is fitted into the through hole. With this configuration, the output shaft 16 and the torsion bar 17 are relatively non-rotatably connected to each other. As described above, when the steering wheel 10 is rotated, the steering shaft 11 is connected and rotated.

In addition, the steering housing 12 includes a shaft holding member 121, rotation support members 123 and 124, and a sub-housing 127.

The rotation support member 123 is located on the X1 side of the shaft holding member 121, while the rotation support member 124 is located on the X1 side of the rotation support member 123. The sub-housing 127 is located on the X1 side of the rotation support member 124. A bearing 125 is provided inside the rotation support member 124 in the radial direction, while a bearing 126 is provided inside the sub-housing 127 in the radial direction. The output shaft 16 is rotatably supported via bearings 125 and 126. A torque sensor 128 is provided between the rotation support member 123 and the rotation support member 124. The torque sensor 128 detects rotational torque transmitted between the column shaft 15 and the output shaft 16.

Here, the steering reaction force device 13 includes a steering shaft 11, a worm wheel 18, a worm shaft 19, and a motor 110.

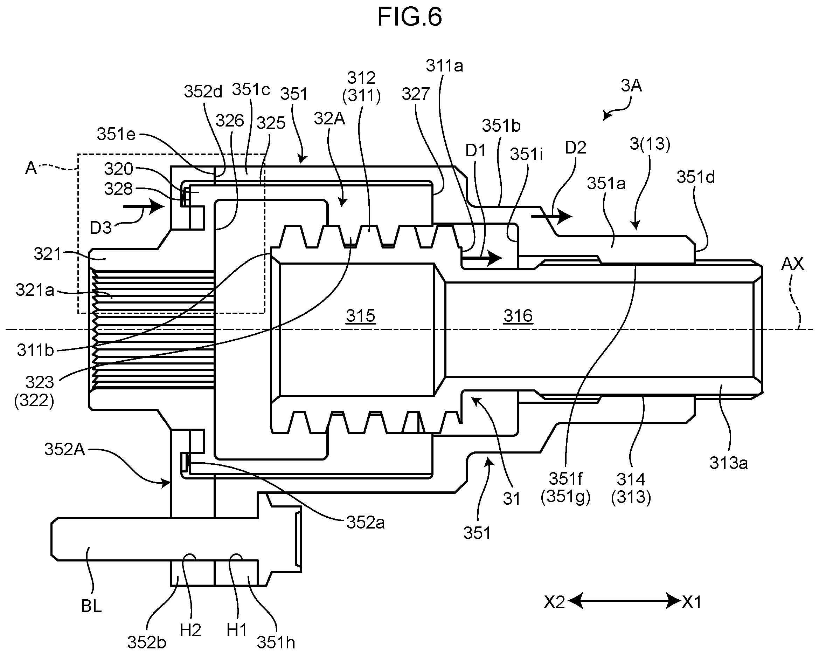

The worm wheel 18 is attached to the outer circumferential side of the output shaft 16 of the steering shaft 11. The worm wheel 18 includes a core metal portion 18a and a wheel tooth portion 18b. On the outer circumferential side of the core metal portion 18a, a wheel tooth portion 18b is provided. The worm shaft 19 and the motor 110 are located on the Y2 side (refer to FIG. 6) of the worm wheel 18. The worm shaft 19 is attached to the output shaft of the motor 110. The worm shaft 19 has a shaft tooth portion 19a. The shaft tooth portion 19a meshes with the wheel tooth portion 18b.

The motor 110 is a generation source of a steering reaction force. That is, the output of the motor 110 becomes reaction torque, and the reaction torque is transmitted from the steering shaft 11 to the steering wheel 10 via the worm wheel 18 and the worm shaft 19.

As illustrated in FIGS. 2 and 3, a stopper mechanism unit 3 is provided on the X1 side with respect to the output shaft 16 of the steering shaft 11. Hereinafter, the stopper mechanism unit 3 will be described in detail.

As illustrated in FIGS. 2 and 3, a rotating member 32 has a central axis AX, and the axial direction of the central axis AX matches the X direction. The rotating member 32 included in the stopper mechanism unit 3 is fitted, using spline fitting, to an X1 side end of the output shaft 16 of the steering shaft 11. That is, an internal spline 321a extending in the X direction is provided on the inner circumferential side of the rotating member 32, while an external spline extending in the X direction is provided on the outer circumferential side at the X1 side end of the output shaft 16. The external spline of the output shaft 16 is fitted to the internal spline 321a of the rotating member 32. With this configuration, the rotating member 32 is movable in the X direction with respect to the output shaft 16 and is not rotatable in a circumferential direction around the axis of the central axis AX. That is, the rotating member 32 rotates integrally with the output shaft 16 about the central axis AX.

As illustrated in FIG. 4, the stopper mechanism unit 3 includes a rotating member 32, a linear motion member 31, a first housing 351, and a second housing 352.

The rotating member 32 has a central axis AX. The axial direction of the central axis AX is the X direction. A direction around the central axis AX is the circumferential direction. A direction orthogonal to the central axis AX is the radial direction. The rotating member 32 is a tubular member extending in the circumferential direction. The rotating member 32 includes a connecting portion 321 and a tubular portion 322.

The connecting portion 321 is located on the X2 side in the rotating member 32. The connecting portion 321 has an internal spline 321a on the inner circumference. A second abutment portion 326 is provided on an inner surface of the connecting portion 321. An end surface 311b of an external thread portion 311 on the X2 side is capable of abutting on the second abutment portion 326.

The tubular portion 322 is adjacent to the connecting portion 321 on the X1 side with respect to the connecting portion 321. The tubular portion 322 has a plurality of internal threads 323 on the inner circumference. The rotating member 32 has an end surface 327 and an end surface 328. The end surfaces 327 and 328 are sandwiched between the first housing 351 and the second housing 352 in the X direction, whereby the positioning of the rotating member 32 in the X direction is made. The rotating member 32 has an outer circumferential surface 325. A gap in the radial direction is provided between the outer circumferential surface 325 and a large diameter portion 351c of the first housing 351.

The linear motion member 31 includes an external thread portion 311 and a spline portion 313. The linear motion member 31 extends in the X direction. The outer circumference of the external thread portion 311 is provided with a plurality of external threads 312. The external thread 312 meshes with the internal thread 323. The spline portion 313 is located on the X1 side with respect to the external thread portion 311. An external spline 314 is provided on the outer circumference of the spline portion 313. The spline portion 313 has an axial direction end 313a at an X1 side end. A large diameter hole 315 is provided inside the external thread portion 311. A small diameter hole 316 is provided inside the spline portion 313. The inner diameter of the large diameter hole 315 is larger than the inner diameter of the small diameter hole 316.

The first housing 351 includes a small diameter portion 351a, a medium diameter portion 351b, and a large diameter portion 351c. The medium diameter portion 351b is adjacent to the large diameter portion 351c on the X1 side with respect to the large diameter portion 351c, while the small diameter portion 351a is adjacent to the medium diameter portion 351b on the X1 side with respect to the medium diameter portion 351b. An internal spline 351f is provided on the inner circumference of the small diameter portion 351a. The internal spline 351f is fitted, using spline fitting, to the external spline 314 of the linear motion member 31. With this configuration, the first housing 351 holds the linear motion member 31 in a state where the linear motion member cannot rotate in the circumferential direction and can linearly move in the X direction. With this configuration, the linear motion member 31 makes a linear motion in the non-rotating state in the X direction with respect to the rotating member 32. The first housing 351 is located on the outer circumferential side of the tubular portion 322 of the rotating member 32 and the linear motion member 31. The small diameter portion 351a is provided with a through hole 351g extending in the X direction. The axial end 313a of the linear motion member 31 can protrude toward the X1 side from an axial end surface 351d of the small diameter portion 351a. A first abutment portion 351i is provided on the inner surface of the small diameter portion 351a. The first abutment portion 351i is capable of abutting on an end surface 311a of the external thread portion 311.

The second housing 352 is located on the X2 side with respect to the first housing 351. The second housing 352 is located on the outer circumferential side of the connecting portion 321. A mating portion 352a of the second housing 352 abuts on the end surface 328 of the rotating member 32. A vertical wall portion 352c is provided at an end portion of the second housing 352 on the X2 side. An inner circumferential surface 352e of the vertical wall portion 352c supports the rotation of the connecting portion 321 in the rotating member 32. An axial end surface 351e of the first housing 351 abuts on an axial end surface 352d of the second housing 352. Here, the axial end surface 351e and the axial end surface 352d correspond to a division portion 300 between the first housing 351 and the second housing 352. The division portions can be provided in various parts such as a division portion 300A and a division portion 300B illustrated in FIG. 4. That is, the present invention is not limited to the illustrated division portions 300, 300A, or 300B, and the first housing 351 and the second housing 352 can be divided at various parts.

As illustrated in FIG. 5, the second housing 352 has flanges 351h protruding toward the Y1 side and the Y2 side. The flange 351h is provided with a first bolt hole H1. The external thread portion of the bolt BL passes through the first bolt hole H1. The first housing 351 has flanges 352b protruding toward the Y1 side and the Y2 side. The flange 352b is provided with a second bolt hole H2. The second bolt hole H2 is provided with an internal thread portion on the inner circumference, and the external thread portion of the bolt BL is meshed with the internal thread portion.

Next, an assembly procedure of the stopper mechanism unit 3 will be briefly described. First, the linear motion member 31 is assembled to the rotating member 32 from the X1 side to the X2 side. Specifically, the external thread 312 of the linear motion member 31 is fastened to the internal thread 323 of the rotating member 32 from the X1 side toward the X2 side.

Next, the first housing 351 is inserted from the X1 side toward the X2 side on the outer circumferential side of the rotating member 32 and the linear motion member 31. Subsequently, the second housing 352 is moved from the X2 side to the X1 side and attached to the first housing 351. Specifically, the flange 351h and the flange 352b are abutted against each other in a state where the first bolt hole H1 and the second bolt hole H2 are aligned. The bolt BL is inserted into the first bolt hole H1 and meshed with the internal thread portion of the second bolt hole H2. This completes the assembly of the stopper mechanism unit 3.

The first abutment portion 351i is located at an end on the X1 side when the linear motion member 31 makes a linear motion. The second abutment portion 326 is located at an end on the X2 side when the linear motion member 31 makes a linear motion. That is, the linear motion member 31 abuts on the first abutment portion 351i at an end contact position when the steering wheel 10 is rotated in the clockwise direction, for example. The linear motion member 31 abuts on the second abutment portion 326 at an end contact position when the steering wheel 10 is rotated in the counterclockwise direction, for example. In other words, the steering wheel 10 can be rotated between a position where the linear motion member 31 abuts on the first abutment portion 351i and a position where the linear motion member 31 abuts on the second abutment portion 326.

As described above, in the first embodiment, the stopper mechanism unit 3 includes the rotating member 32 including the connecting portion 321 and the tubular portion 322, the linear motion member 31, the first housing 351 located on the outer circumferential side of the tubular portion 322 and the linear motion member 31, and the second housing 352 located on the X2 side with respect to the first housing 351 and on the outer circumferential side of the connecting portion 321.

As described above, Patent Literature 1 uses complicated assembly work of the stopper mechanism unit, leading to a possibility of an increase in the work load. Specifically, the first housing is attached to the outer circumference of the steering shaft. Next, a stopper unit including the rotating member, the nut, the first stopper, and the second stopper is assembled. The stopper unit is inserted (using spline fitting) toward one side in the axial direction of the steering shaft to abut on the first housing, and thereafter, the second housing is fitted from one side in the axial direction of the steering shaft, to complete the assembly work of the stopper mechanism unit.

In contrast, according to the present embodiment, the stopper mechanism unit 3 can be assembled by the following simple procedure.

Specifically, first, the external thread 312 of the linear motion member 31 is fastened to the internal thread 323 of the rotating member 32 from the X1 side toward the X2 side so as to assemble the linear motion member 31 to the rotating member 32 from the X1 side toward the X2 side. Next, the first housing 351 is inserted from the X1 side to the X2 side on the outer circumferential side of the rotating member 32 and the linear motion member 31, and the second housing 352 is attached to the first housing 351.

In this manner, according to the present embodiment, it is possible to provide the vehicle steering device 100 including the stopper mechanism unit 3 that can be assembled with a simpler procedure.

A through hole 351g is provided at an X1 side end of the first housing 351, and the spline portion 313 of the linear motion member 31 can protrude from the through hole 351g to the X1 side.

Rotating the steering wheel 10 rotates the steering shaft 11 and the rotating member 32, allowing the linear motion member 31 to move in the X direction. Here, in a case where the linear motion member 31 is accommodated inside the housing and is not visible from the outside, the position in the X direction of the linear motion member 31 is not identified, and thus, the rotation direction (clockwise direction or counterclockwise direction) of the steering wheel 10 is not known, and the rotation angle is also not identified.

In contrast, in the present embodiment, the spline portion 313 of the linear motion member 31 can protrude from the through hole 351g toward the X1 side, enabling visual recognition of the rotation direction and the rotation angle of the steering wheel 10. By applying a marking or the like to the outer circumferential surface of the spline portion 313, the rotation direction and the rotation angle of the steering wheel 10 can be recognized with higher accuracy.

### (Second Embodiment)

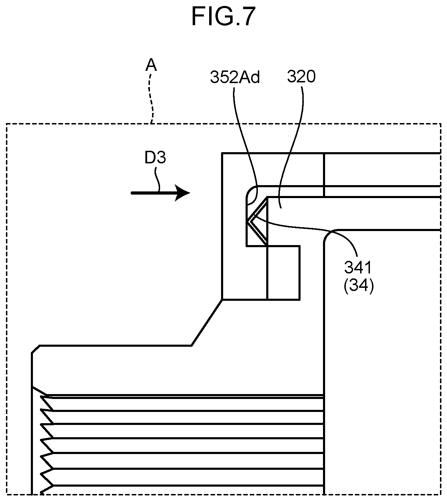

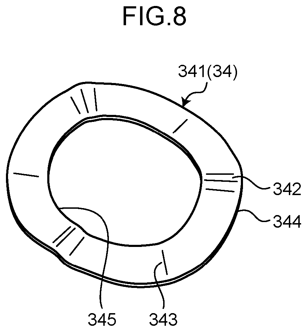

Hereinafter, a second embodiment will be described. FIG. 6 is a cross-sectional view of a stopper mechanism unit according to the second embodiment. FIG. 7 is an enlarged cross-sectional view of portion A in FIG. 6. FIG. 8 is a perspective view of a wave washer.

The second embodiment is different from the first embodiment in that a wave washer 341 (elastic member 34) is added. Hereinafter, the difference will be mainly described.

As illustrated in FIG. 6, a stopper mechanism unit 3A according to the second embodiment includes a rotating member 32A. In the rotating member 32A, the connecting portion 321 is provided with a protrusion 320. The protrusion 320 protrudes toward the X2 side. a second housing 352A is provided with a recess 352Ad. The recess 352Ad is recessed toward the X2 side. The recess 352Ad internally accommodates a wave washer 341 (elastic member 34).

As illustrated in FIG. 8, the wave washer 341 has an inner circumferential edge 345 on the inner side in the radial direction and an outer circumferential edge 344 on the outer side in the radial direction. In addition, a bent portion 342 and a bent portion 343 are alternately arranged in the circumferential direction. The bent portion 342 protrudes toward the X2 side, while the bent portion 343 protrudes toward the X1 side. The wave washer 341 is an example of the elastic member 34, and various elastic members such as disc springs can be applied, in addition to the wave washer 341. Next, an operational effect of the wave washer 341 in the stopper mechanism unit 3A will be briefly described.

First, in FIG. 6, as indicated by arrow D1, when the linear motion member 31 makes a linear motion toward the X1 side and the end surface 311a abuts on the first abutment portion 351i, the first housing 351 moves toward the X1 side as indicated by arrow D2.

Since the second housing 352A is fixed to the first housing 351, the second housing 352A also moves to the X1 side as indicated by arrow D3 in FIGS. 6 and 7. This allows the wave washer 341 to contract in the X direction to reduce impact.

When the linear motion member 31 makes a linear motion toward the X2 side and the end surface 311b abuts on the second abutment portion 326, the second housing 352A moves toward the X2 side. This allows the wave washer 341 to contract in the X direction to reduce impact.

As described above, in the stopper mechanism unit 3A of the second embodiment, the wave washer 341 (elastic member 34) is accommodated in the recess 352Ad of the second housing 352A.

Therefore, when the linear motion member 31 moves to the X1 side and abuts on the first abutment portion 351i, the first housing 351 and the second housing 352A move to the X1 side. This allows the wave washer 341 to contract in the X direction to reduce impact.

When the linear motion member 31 moves to the X2 side and the end surface 311b abuts on the second abutment portion 326, the connecting portion 321 moves to the X2 side, allowing the wave washer 341 to contract in the X direction to reduce the impact.

In this manner, even when the linear motion member 31 moves to either the X1 side or the X2 side, the wave washer 341 can reduce the impact when the rotating member 32 or the first housing 351 and the linear motion member 31 come into contact.

### (Third Embodiment)

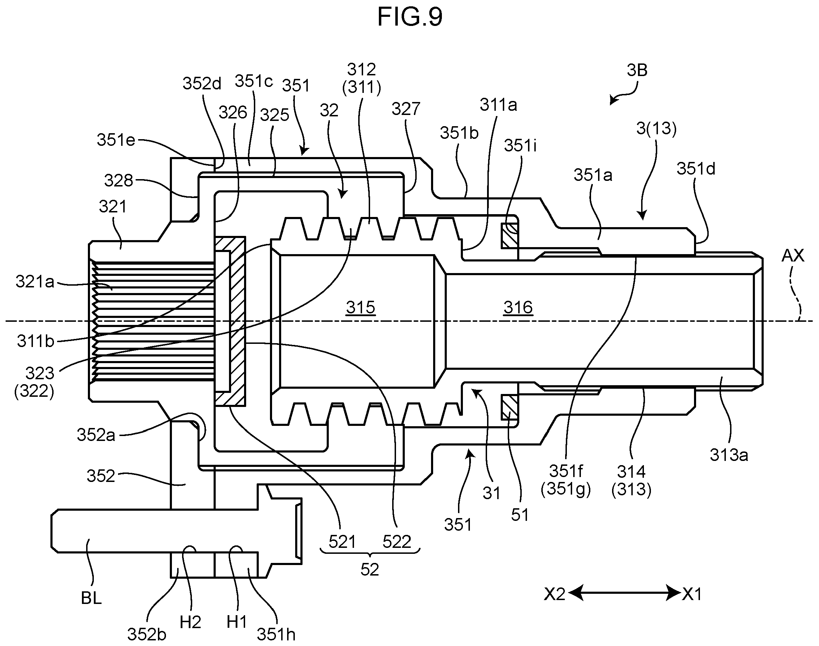

Hereinafter, a third embodiment will be described. FIG. 9 is a cross-sectional view of a stopper mechanism unit according to the third embodiment.

The third embodiment is different from the first embodiment in that a linear motion distance variable member is added. Hereinafter, the difference will be mainly described.

As illustrated in FIG. 9, in a stopper mechanism unit 3B according to the third embodiment, a linear motion distance variable member 51 is disposed between the first abutment portion 351i and the end surface 311a. The linear motion distance variable member 51 is an annular member extending around the axis of the central axis AX and has a thickness in the axial direction. The linear motion member 31 is capable of abutting on the linear motion distance variable member 51. The rigidity of the linear motion distance variable member 51 is higher than or equal to the rigidity of the linear motion member 31, for example. The linear motion distance variable member 51 is a resin, for example. By the abutment of the linear motion member 31, the linear motion distance variable member 51 varies the distance in the axial direction when the linear motion member 31 makes a linear motion. The distance of the linear motion member 31 in the axial direction decreases by the thickness of the linear motion distance variable member 51.

Between the second abutment portion 326 and the end surface 311a, a linear motion distance variable member 52 is disposed. The linear motion distance variable member 52 is an annular member extending around the axis of the central axis AX and has a thickness in the axial direction. The linear motion member 31 is capable of abutting on the linear motion distance variable member 52. The linear motion distance variable member 52 includes a disc portion 522 and a flange portion 521. The flange portion 521 protrudes from the circumferential edge portion of the disc portion 522 toward the X2 side. The flange portion 521 extends in the circumferential direction. The rigidity of the linear motion distance variable member 52 is higher than or equal to the rigidity of the linear motion member 31, for example. The linear motion distance variable member 52 is a resin, for example. By the abutment of the linear motion member 31, the linear motion distance variable member 52 varies the distance in the axial direction when the linear motion member 31 makes a linear motion. The distance of the linear motion member 31 in the axial direction decreases by the thickness of the linear motion distance variable member 52.

It is allowable to provide both of or either one of a linear motion distance variable member 5 and the linear motion distance variable member 52.

As described above, in the third embodiment, the stopper mechanism unit 3B is provided with the linear motion distance variable member 5. The linear motion distance variable member 5 includes the linear motion distance variable members 51 and 52, for example.

Therefore, according to the present embodiment, with the simple configuration of the linear motion distance variable member 5, it is possible to vary the distance in the axial direction when the linear motion member 31 makes a linear motion, and eventually vary the rotation angle of the steering wheel 10.

### (Fourth Embodiment)

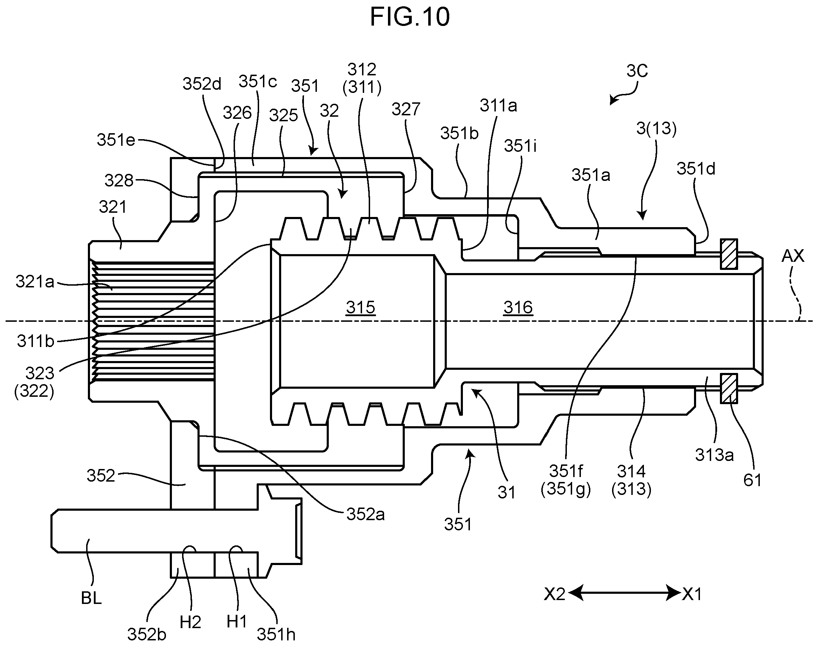

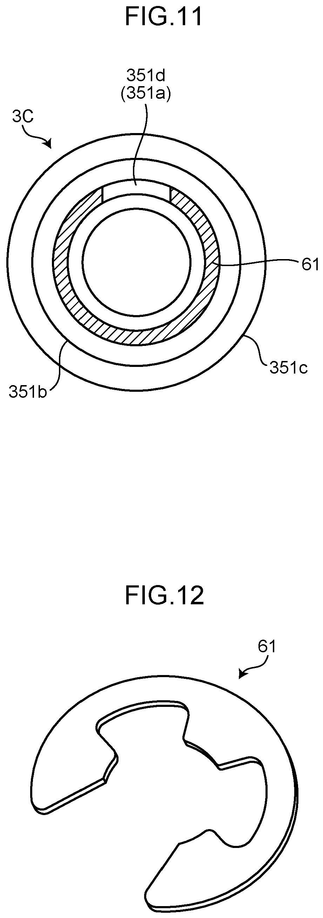

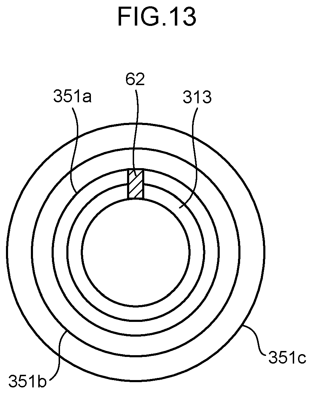

Hereinafter, a fourth embodiment will be described. FIG. 10 is a cross-sectional view of a stopper mechanism unit according to the fourth embodiment. FIG. 11 is a schematic diagram of FIG. 10 as viewed from the X1 side. FIG. 12 is a perspective view of a motion stop. FIG. 13 is a schematic diagram according to a modification in which a pin is applied as a protrusion. FIG. 13 is a view of FIG. 10 as viewed from the X1 side.

The fourth embodiment is different from the first embodiment in that a motion stop 61 or a pin 62 is added. Hereinafter, the difference will be mainly described.

As illustrated in FIGS. 10 to 12, in a stopper mechanism unit 3C according to the fourth embodiment, the spline portion 313 of the linear motion member 31 is provided with the motion stop 61 (protrusion 6) protruding in the radial direction. The motion stop 61 is an example of the protrusion 6. Specifically, the motion stop 61 is attached to an X1 side end of the spline portion 313. The spline portion 313 is provided with a groove in the circumferential direction, and the motion stop 61 is fitted into the groove. The motion stop 61 is located on the X1 side with respect to the axial end surface 351d of the first housing 351 and faces the axial end surface 351d. The motion stop 61 acts as a stopper that stops the linear motion of the linear motion member 31 toward the X2 side.

The pin 62 illustrated in FIG. 13 can be applied as the protrusion 6. Specifically, the pin 62 is attached to an X1 side end of the spline portion 313. The spline portion 313 is provided with a groove, and the pin 62 is fitted into the groove. The pin 62 is located on the X1 side with respect to the axial end surface 351d of the first housing 351 and faces the axial end surface 351d. The pin 62 acts as a stopper that stops the linear motion of the linear motion member 31 toward the X2 side.

As described above, in the stopper mechanism unit 3C of the fourth embodiment, the protrusion 6 is provided in the spline portion 313 of the linear motion member 31. The protrusion 6 is the motion stop 61 or the pin 62, for example. The protrusion 6 protrudes in the radial direction and abuts on the axial end surface 351d to stop the linear motion of the linear motion member toward the X1 side.

When the end surface 311b of the linear motion member 31 abuts on the second abutment portion 326, the non-rotating end surface 311b abut on the rotating second abutment portion 326, thus generating friction between them, and whereby the end surface 311b and the second abutment portion 326 might be eventually damaged by wear.

In the present embodiment, the linear motion member 31 and the first housing 351 are both non-rotating members. Accordingly, when the linear motion member 31 makes a linear motion toward the X2 side, the non-rotating protrusion 6 abut on the axial end surface 351d of the non-rotating first housing 351. Consequently, according to the present embodiment, it is possible to reduce damage to the protrusion 6 and the axial end surface 351d.

### Reference Signs List

- 3, 3A, 3B, 3C: STOPPER MECHANISM UNIT
- 4: STEERING UNIT
- 5: LINEAR MOTION DISTANCE VARIABLE MEMBER
- 6: PROTRUSION
- 10: STEERING WHEEL
- 11: STEERING SHAFT
- 12: STEERING HOUSING
- 13: STEERING REACTION FORCE DEVICE
- 14: CONTROL DEVICE (ECU)
- 15: COLUMN SHAFT
- 16: OUTPUT SHAFT
- 17: TORSION BAR
- 18: WORM WHEEL
- 18a: CORE METAL PORTION
- 18b: WHEEL TOOTH PORTION
- 19: WORM SHAFT
- 19a: SHAFT TOOTH PORTION
- 20: TURNING UNIT
- 21: TURNING MOTOR
- 22: TURNING WHEEL
- 31: LINEAR MOTION MEMBER
- 32, 32A: ROTATING MEMBER
- 34: ELASTIC MEMBER
- 51: LINEAR MOTION DISTANCE VARIABLE MEMBER
- 52: LINEAR MOTION DISTANCE VARIABLE MEMBER
- 61: MOTION STOP (PROTRUSION)
- 62: PIN (PROTRUSION)
- 100: VEHICLE STEERING DEVICE
- 311: EXTERNAL THREAD PORTION
- 311a: END SURFACE
- 311b: END SURFACE
- 312: EXTERNAL THREAD
- 313: SPLINE PORTION
- 313a: AXIAL END
- 314: EXTERNAL SPLINE
- 315: LARGE DIAMETER HOLE
- 316: SMALL DIAMETER HOLE
- 320: PROTRUSION
- 321: CONNECTING PORTION
- 321a: INTERNAL SPLINE
- 322: TUBULAR PORTION
- 323: INTERNAL THREAD
- 325: OUTER CIRCUMFERENTIAL SURFACE
- 326: SECOND ABUTMENT PORTION
- 327, 328: END SURFACE
- 341: WAVE WASHER
- 342, 343: BENT PORTION
- 344: OUTER CIRCUMFERENTIAL EDGE
- 345: INNER CIRCUMFERENTIAL EDGE
- 351: FIRST HOUSING
- 351a: SMALL DIAMETER PORTION
- 351b: MEDIUM DIAMETER PORTION
- 351c: LARGE DIAMETER PORTION
- 351d: AXIAL END SURFACE
- 351e: AXIAL END SURFACE
- 351f: INTERNAL SPLINE
- 351g: THROUGH HOLE
- 351h: FLANGE
- 351i: FIRST ABUTMENT PORTION
- 352: SECOND HOUSING
- 352a: MATING PORTION
- 352b: FLANGE
- 352d: AXIAL END SURFACE
- 352A: SECOND HOUSING
- 352Ad: RECESS
- 521: FLANGE PORTION
- 522: DISC PORTION
- BL: BOLT
- H1: FIRST BOLT HOLE
- H2: SECOND BOLT HOLE

## Claims

1. A vehicle steering device in which a steering shaft to which a steering wheel is connected, and a turning wheel, are mechanically disconnected, the vehicle steering device comprising
a stopper mechanism unit that regulates a range of a rotation angle of the steering wheel when the steering wheel is rotated,
wherein the stopper mechanism unit comprises:
a rotating member that extends in an axial direction of a central axis, is rotatable in a circumferential direction around the central axis, and comprises a connecting portion and a tubular portion, the connecting portion being connected to the steering shaft, the tubular portion being located on one side in the axial direction with respect to the connecting portion and having an internal thread on an inner circumference;
a linear motion member that is provided on an inner circumferential side of the tubular portion, has an external thread that meshes with the internal thread on an outer circumference, and is configured to make a linear motion in an axial direction with respect to the rotating member;
a first housing that is located on an outer circumferential side of the tubular portion and the linear motion member and is configured to hold the linear motion member in a state where the linear motion member is not rotatable in a circumferential direction and is capable of making a linear motion in the axial direction;
a second housing that is located on the other side in the axial direction with respect to the first housing and on an outer circumferential side of the connecting portion, and configured to be attached to the first housing; and
a first abutment portion and a second abutment portion on which the linear motion member abuts to stop the linear motion.

2. The vehicle steering device according to claim 1,
wherein an internal spline is provided on an inner circumference of the first housing,
the linear motion member comprises: an external thread portion having the external thread and capable of abutting on the first abutment portion and the second abutment portion; and a spline portion located on one side in the axial direction with respect to the external thread portion and provided with an external spline fittable to the internal spline on an outer circumference,
a through hole penetrating in the axial direction is provided at an end on one side in the axial direction of the first housing, and
in a state where the linear motion member makes a linear motion toward one side in the axial direction,
the spline portion of the linear motion member is capable of protruding from the through hole of the first housing to one side in the axial direction.

3. The vehicle steering device according to claim 1 or 2,
wherein a gap is provided in the axial direction between a part of the rotating member and an inner surface of the second housing, and
the gap is provided to accommodate an elastic member to reduce impact when the linear motion member abuts on the first abutment portion and impact when the linear motion member abuts on the second abutment portion.

4. The vehicle steering device according to claim 2,
wherein a linear motion distance variable member is interposed in at least one of a space between the first abutment portion and the external thread portion and a space between the second abutment portion and the external thread portion, the linear motion distance variable member having a thickness in an axial direction and on which the linear motion member is capable of abutting, the linear motion distance variable member being configured to vary an distance in the axial direction when the linear motion member makes a linear motion.

5. The vehicle steering device according to claim 4,
wherein the spline portion of the linear motion member comprises
a protrusion that is disposed on one side in the axial direction in the first housing with respect to an axial end surface on one side in the axial direction of the first housing, protrudes in the radial direction, and is configured to abut on the axial end surface to stop a linear motion of the linear motion member toward the one side in the axial direction.
